# EUROPÄISCHE PATENTSCHRIFT

(11) **EP 2 611 689 B1**
(45) Veröffentlichungstag und Bekanntmachung des Hinweises auf die Patenterteilung: **10.12.2014**
(21) Anmeldenummer: 11732478.0
(22) Anmeldetag: 18.07.2011
(51) Int. Cl.: B64D 9/00, B64D 1/10, B64D 1/12, B64C 1/20

(54) **FRACHTDECK MIT EINEM FRACHTGATTER ZUM HALTEN MINDESTENS EINES FRACHTSTÜCKS INNERHALB EINES FRACHTRAUMS EINES FLUGZEUGS UND VERFAHREN ZUM UM- ODER AUSRÜSTEN EINES FRACHTDECKS ZUM ABWURF VON FRACHTSTÜCKEN**
CARGO DECK WITH A CARGO RESTRAINT FOR RESTRAINING AT LEAST ONE PIECE OF CARGO INSIDE A CARGO BAY OF AN AIRCRAFT AND METHOD FOR CONVERTING OR FITTING A CARGO DECK FOR RELEASING CARGO ITEMS
PLANCHER AVEC UN DISPOSITIF DE RETENUE POUR RETENIR AU MOINS UNE PIÈCE DE FRET DANS UNE SOUTE DE CHARGEMENT D'UN AÈRONEF, ET PROCÉDÉ DE CONVERTIR OU ÉQUIPPER UN PLANCHER POUR LE LANCEMENT DES PIÈCES DE FRET

(30) Priorität: 10.11.2010 DE 102010060467; 31.08.2010 DE 102010037250
(43) Veröffentlichungstag der Anmeldung: 10.07.2013
(73) Patentinhaber: Telair International GmbH, 83714 Miesbach (DE)
(72) Erfinder: HOLZNER, Richard, 83071 Stephanskirchen (DE); HUBER, Thomas, 83727 Schliersee (DE)
(74) Vertreter: Bohnenberger, Johannes
(86) Internationale Anmeldenummer: PCT/EP2011/062191
(87) Internationale Veröffentlichungsnummer: WO 2012/028374

(56) Entgegenhaltungen:
- EP-A2- 0 771 726
- GB-A- 2 393 704
- US-A- 4 372 715
- US-A- 4 426 051
- US-A- 4 461 437

## Beschreibung

Die Erfindung betrifft ein Frachtgatter zum Halten mindestens eines Frachtstücks auf einer vorgegebenen Position innerhalb eines Frachtraums eines Flugzeugs, ein Frachtdeck mit einem entsprechenden Frachtgatter sowie ein Verfahren zum Um- oder Ausrüsten eines Frachtdecks zum Abwurf von Frachtstücken während des Fluges.

Zum Transportieren von Luftfracht werden die zu transportierenden Frachtstücke, insbesondere Container oder Paletten, die vorzugsweise nach bestimmten Normen gefertigt sind, innerhalb des Frachtraums mittels Riegelelementen am Boden des Frachtraums befestigt.

Im Bereich militärischer Frachten existiert eine besondere Norm, nach welcher die Container oder Paletten randseitige Einkerbungen in regelmäßigen Abständen aufweisen, in welche Riegelnasen von Riegeleinrichtungen zum Halten der Container in X-Richtung, also in Längsrichtung des Flugzeuges eingreifen. Üblicherweise sind diese Riegelnasen in der Ebene des Frachtraums, also der X-Y-Ebene verschwenkbar ausgebildet. Es gibt jedoch auch Ausbildungsformen, bei denen die Riegel nach oben oder nach unten verschwenkt werden. Besonders kritisch ist der Vorgang, wenn Frachtstücke während eines Fluges über Fallschirme entladen werden. In diesem Fall müssen die Riegelelemente dann, wenn die heckseitige Ladeluke geöffnet und die Fracht über zuvor ausgestoßene Fallschirme aus dem Frachtraum herausgezogen werden soll, sicher geöffnet sein, da ansonsten ein Absturz insbesondere bei niedriger Flughöhe droht. Entsprechende Riegeleinrichtungen sind aus der EP 0 771 726 A2 und der US 4,372,715 bekannt.

Mitunter müssen jedoch auch Frachtstücke abgeworfen werden, die entsprechende Einkerbungen zum Eingreifen der Riegelnasen nicht oder nicht in ausreichender Form aufweisen. Des Weiteren gibt es Frachtstücke, die nicht der vorgegebenen Norm entsprechen oder eine Norm aufweisen, die für ein anderes Frachtladesystem ausgelegt ist. Ein Beispiel von derartigen Frachtstücken sind die Abwurfcontainer A-21 und A-22, deren Bodenplatten in der Regel aus 12 bis 20 mm dickem Sperrholz bestehen. Während des Fluges werden derartige Frachtstücke nach vorne hin mittels eines Anschlags ("buffer stop") befestigt. Eine weitergehende Fixierung erfolgt beispielsweise mittels Schlaufen, wie diese in der US 4,426,051 gezeigt sind. Alternativ können Frachtgatter vorgesehen werden, die in Längsrichtung zwischen den einzelnen Frachtstücken angebracht sind. Derartige Frachtgatter (z.B. "CDS Gates") haben ein flächiges Rückhalteelement, das sich im Wesentlichen in der Y-Z-Ebene erstreckt, um die Frachtstücke im Frachtraum zu halten. Die Frachtgatter nehmen insbesondere Kräfte auf, die in Längsrichtung (also in X-Richtung) des Flugzeuges wirken. Es ist bekannt, derartige Frachtgatter zum Abwurf der Frachtstücke während des Fluges elektrisch oder pneumatisch abzusenken. Die bekannten Frachtgatter sind üblicherweise eigenständige Systeme, welche sehr komplex aufgebaut sind und mittels eigenständiger Stellmotoren bzw. Auslösemechanismen abgeklappt bzw. ausgelöst werden. Daher wird für das Umrüsten eines Frachtraums entsprechend einer bestimmten Ladeanforderung sehr viel Zeit benötigt. Des Weiteren ist das Anschließen der Systeme aufwändig und fehleranfällig. Hinzu kommt, dass die bekannten Frachtgatter sehr schwer sind, so dass sie erheblich zum Gesamtgewicht des Flugzeugs beitragen.

Aus der GB 2393704 A, die den nächstliegenden Stand der Technik darstellt, ist eine Riegeleinrichtung bekannt, die es ermöglicht, während des Fluges Frachtstücke abzuwerfen. Hierfür ist es jedoch notwendig, dass mehrere Riegeleinrichtungen parallel nebeneinander eingesetzt werden, um das entsprechende Frachtstück während des Fluges zu halten.

Ausgehend von diesem Stand der Technik ist es Aufgabe der vorliegenden Erfindung, ein verbessertes Funktionselement bereitzustellen, das einen entsprechenden Abwurf ermöglicht. Insbesondere soll das Umkonfigurieren und Individualisieren eines Frachtdecks mittels des erfindungsgemäßen Funktionselements erleichtert werden.

Diese Aufgabe wird durch ein Frachtdeck gemäß Anspruch 1 sowie durch ein Verfahren gemäß Anspruch 14 gelöst.

Ein zentraler Gedanke der vorliegenden Erfindung besteht also darin, ein sehr einfach aufgebautes, vorzugsweise rein mechanisches Frachtgatter bereitzustellen, das mittels vorhandener Riegeleinrichtungen in einer Arbeitsposition gehalten und ausgelöst werden kann. Ein entsprechendes Frachtgatter kann sehr einfach und robust aufgebaut werden. Da dieses möglicherweise keine elektrischen oder pneumatischen Elemente umfasst, ist ein Ausfall eines derartigen Frachtgatters unwahrscheinlich. Des Weiteren können Frachtdecks, die für normierte Frachtstücke ausgerüstet sind, ohne größeren Aufwand umgerüstet werden, so dass auch nicht normierte oder anders normierte Frachtstücke abgeworfen werden können. Ein wesentlicher Punkt der vorliegenden Erfindung besteht darin, dass der Anschlag am Rückhalteelement vorgesehen ist, der derart ausgebildet ist, dass er in Wirkverbindung mit einer Riegeleinrichtung, insbesondere mit einer Riegelnase einer Riegeleinrichtung, gebracht werden kann. Die Riegelnase der Riegeleinrichtung fungiert also als Auslöser, während das Frachtgatter ein passives Element ist.

Der Anschlag kann mittels eines Anschlaggelenks aus einer Anschlagposition in eine Absenkposition verschwenkbar sein. Die bereits in der Einleitung beschriebenen, militärisch eingesetzten Riegeleinrichtungen sind häufig mit Seitenführungen verbaut, die die Frachtstücke teilweise umgreifen, so dass diese in die Z-Richtung des Flugzeuges - also nach oben - abgesichert sind. Vorzugsweise ist der Anschlag derart ausgebildet, dass er in einen durch die Seitenführung gebildeten Führungsbereich, der auch die Riegelnase enthält, eingreifen kann. Um ein Verklemmen des Anschlags beim Abklappen in die Ruheposition zu vermeiden, ist der Anschlag gelenkig gelagert. Insofern kann er beim Herabklappen in geeigneter Weise verschwenkt werden.

Das Frachtgatter kann mindestens ein Federelement umfassen, das den Anschlag in die Absenkposition - also die Position, die das Herunterklappen des Frachtgatters nicht behindert - vorspannt. Für ein sicheres Abklappen des Rückhalteelements aus der Rückhalteelementarbeitsposition in die Ruheposition ist es hilfreich, wenn der Anschlag, sobald auf diesen keine oder nur noch eine geringe Kraft wirkt, in die Absenkposition verschwenkt wird. Hierfür kann ein entsprechendes Federelement vorgesehen werden, das den Anschlag in diese Position vorspannt.

Das Gelenk zum Verschwenken des Rückhalteelements aus der Rückhalteelementarbeitsposition in die Ruheposition kann ein Drehgelenk umfassen, das eine Rotationsachse definiert. Bei der gelenkigen Lagerung des Rückhalteelements ist ein Drehgelenk zu bevorzugen, da dieses ein Wegklappen des Rückhalteelements in die Abwurfrichtung ermöglicht, so dass es zu keiner Verkeilung von beweglichen Elementen kommen kann.

Der Anschlag kann das Rückhalteelement in der Anschlagposition in einer Richtung parallel zur Rotationsachse überragen. Vorzugsweise handelt es sich hierbei um die Y-Richtung des Flugzeugs.

Die Befestigungseinrichtung kann eine Halteeinrichtung, insbesondere einen Schnellverschluss, z.B. einen Halteschlitten, zur Befestigung in einer Lochschiene und/oder einer Sitzschiene des Frachtraums umfassen.

Vorzugsweise ist die Befestigungseinrichtung also reversibel am Frachtdeck befestigbar, so dass die Position des Frachtgatters einfach verändert werden kann. Zur Befestigung des Frachtgatters am Frachtdeck können alle in diesem Bereich bekannten Mechanismen verwendet werden. Vorzugsweise wird die Befestigungseinrichtung in Lochschienen und/oder Sitzschienen, die am Frachtraumboden vorgesehen sind, verankert. Erfindungsgemäß können auch entsprechende Adapter vorgesehen werden, um die Befestigungseinrichtung an jeder beliebigen Stelle innerhalb des Frachtraums zu verankern. Die Halteeinrichtungen ermöglichen es, das Frachtdeck schnell umzukonfigurieren. So kann das Frachtdeck individuell auf unterschiedliche Frachtstücke beispielsweise mit unterschiedlichen Längen angepasst werden. Durch die Positionierung innerhalb der Lochschienen und/oder Sitzschienen kann jeweils eine Position für das Frachtdeck gefunden werden, in der ein korrespondierendes Riegelelement bzw. eine korrespondierende Riegeleinrichtung vorhanden ist.

Das Rückhalteelement kann ein flächiges und/oder gitterförmiges Element sein, das sich entlang einer Rückhalteelement-Ebene erstreckt. Das Frachtgatter, insbesondere die Befestigungseinrichtung, kann zur Befestigung des Rückhalteelements derart auf einem Frachtdeck ausgebildet sein, dass sich die Rückhalteelement-Ebene in der Rückhalteelementarbeitsposition im Wesentlichen senkrecht zur X-Richtung des Frachtdecks, insbesondere des Flugzeugs, erstreckt.

Das Frachtgatter kann derart ausgebildet sein, dass es im am Frachtdeck angebrachten Zustand mindestens ein Drittel, insbesondere mindestens die Hälfte, insbesondere mindestens zwei Drittel, einer Frachtladebahn des Frachtdecks überspannt.

Das Rückhalteelement kann eine Breite von mindestens 60 cm oder mindestens 70 cm oder mindestens 80 oder mindestens 90 cm oder 100 cm haben. Die Breite des Rückhalteelements kann so definiert werden, dass sie die Erstreckung des Rückhalteelements entlang der Rotationsachse bezeichnet.

Das Rückhalteelement kann eine Höhe von mindestens 5 cm oder mindestens 7 cm oder mindestens 10 cm oder mindestens 12 oder mindestens 15 cm haben. Die Höhe des Rückhalteelements kann so definiert sein, dass sie in der Rückhalteelementarbeitsposition des Rückhalteelements die kürzeste Distanz zwischen der Rotationsachse und dem höchsten Punkt des Rückhalteelements bezeichnet.

Die oben genannte Aufgabe wird des Weiteren durch ein Frachtdeck eines Flugzeugs gelöst, das sich entlang einer X-Richtung (Längsrichtung des Flugzeugs) und einer Y-Richtung (Querrichtung des Flugzeugs) erstreckt, wobei das Frachtdeck umfasst:
- mindestens ein Frachtgatter wie bereits vorab beschrieben;
- mindestens eine Riegeleinrichtung mit einer Riegelnase, die aus einer Riegelnasenarbeitsposition in eine Ladeposition verschwenkbar ist, wobei das Frachtgatter derart angeordnet ist, dass die Riegelnase in der Riegelnasenarbeitsposition mit dem Anschlag in Wirkverbindung steht, um das Rückhalteelement in der Rückhalteelementarbeitsposition zu halten.

Die Riegelnase nimmt also in der Rückhalteelementarbeitsposition zumindest einen Teil der auf das Frachtgatter wirkenden Kräfte auf. Vorzugsweise wirken diese Kräfte in X-Richtung auf das Frachtgatter, insbesondere dessen Rückhalteelement, und werden über die Riegelnase in das Frachtdeck abgeleitet. Es ergeben sich ähnliche Vorteile, wie diese bereits in Verbindung mit dem Frachtgatter allein beschrieben wurden.

Das Frachtdeck kann mindestens eine entlang der X-Richtung verlaufende Seitenführung zum Halten und Führen der Frachtstücke umfassen, wobei die mindestens eine Riegeleinrichtung derart angeordnet ist, dass deren Riegelnase in einen Führungsbereich der Seitenführung hineinragt. Vorzugsweise befindet sich an jeder Seite des Frachtdecks eine sich in X-Richtung erstreckende Seitenführung. Ähnliche Seitenführungen mit oder ohne Riegeleinrichtungen können beispielsweise mittig im Flugzeug vorgesehen werden, so dass zwei Ladebahnen auf dem Frachtdeck ausgebildet werden. Der bereits beschriebene gelenkig gelagerte Anschlag kann an einer Seite oder an beiden Seiten in den durch die Seitenführungen definierten Führungsbereich hineinragen und dort die Riegelnasen kontaktieren. Nach dem Absenken der Riegelnasen wird das Rückhalteelement aufgrund der darauf wirkenden Kräfte automatisch in die Ruheposition verschwenkt.

Das Frachtdeck kann eine Vielzahl von gleichen oder ähnlich ausgebildeten Riegeleinrichtungen umfassen, die zum Halten von Frachtstücken, insbesondere zur Aufnahme von in X-Richtung wirkenden Kräften, in den Führungsbereich der Seitenführungen hineinragen, wobei Fixierpunkte, insbesondere Sitzschienen oder Lochschienen, am Frachtdeck vorgesehen sind, um das mindestens eine Frachtgatter an Positionen festzusetzen, in denen jeweils mindestens eine Riegelnase der Vielzahl von Riegeleinrichtungen mit dem Anschlag des mindestens einen Frachtgatters in Wirkverbindung bringbar ist. Beispielsweise können die Riegeleinrichtungen in vordefinierten, insbesondere regelmäßigen Abständen angeordnet sein. Die Fixierpunkte ermöglichen es, mindestens ein Frachtgatter an verschiedenen Positionen so festzusetzen, dass dessen Anschlag in Wirkverbindung mit einer Riegelnase einer Riegeleinrichtung bringbar ist.

Die Riegeleinrichtung kann eine Einstellvorrichtung zur ferngesteuerten, insbesondere elektrischen und/oder pneumatischen, Betätigung umfassen. Vorzugsweise lassen sich die für einen Abwurf notwendigen Funktionselemente (z.B. Riegeleinrichtungen, Rollenantriebseinheiten, usw.) fernsteuern, so dass sich ein vorgegebener Zeitplan einhalten lässt. Vorzugsweise übernimmt eine entsprechende Fernsteuerung ein Computer, insbesondere ein Mission Control Computer.

Die Einstellvorrichtung kann derart ausgebildet sein, dass die Riegeleinrichtung in mindestens drei Zustände bringbar ist, nämlich:
- einen Ladezustand, in dem sich die Riegelnase in der Ladeposition befindet;
- einen Haltezustand, in dem sich die Riegelnase in der Arbeitsposition befindet und festgestellt ist; und
- einen Auslösezustand, in dem sich die Riegelnase in der Riegelnasenarbeitsposition befindet, jedoch dann aus der Riegelnasenarbeitsposition in die Ladeposition verschwenkbar ist, wenn eine auf die Riegelnase in X-Richtung wirkende Kraft, die insbesondere durch das Frachtgatter ausgeübt wird, einen vorbestimmten Betrag übersteigt.

Insofern kann ein Frachtgatter bereitgestellt werden, das sich nicht wie herkömmliche Frachtgatter auf ein bestimmtes elektrisches Signal hin absenkt, sondern bis zum Abwurf eine gewisse Haltekraft bereitstellt, die nur durch das Aufbringen von zusätzlichen Kräften überwunden werden kann.

Ein derartiges Frachtgatter verhindert ein zu frühes oder ungewolltes Abwerfen von Frachtstücken.

Die Einstellvorrichtung kann eine Federeinrichtung umfassen, welche den vorbestimmten Betrag der in X-Richtung wirkenden Kraft definiert.

Die Federeinrichtung kann eine, insbesondere elektromotorisch, verstellbare Spanneinrichtung umfassen, um eine Vorspannung einer Haltefeder einzustellen.

Diese Vorspannung kann den Auslösezeitpunkt im Haltezustand der Riegeleinrichtung definieren. Die Haltefeder gibt also die Kraft vor, die aufgebracht werden muss, um das Frachtgatter auszulösen.

Vorzugsweise ist die Einstellvorrichtung derart ausgebildet, dass sie neben dem Ladezustand, dem Haltezustand und dem Auslösezustand die Riegeleinrichtung in mindestens einen vierten Zustand einnehmen kann, nämlich einen Abwurfzustand, in dem sich die Riegelnase der Ladeposition befindet. Insofern ist dieser Zustand im Wesentlichen gleich dem Ladezustand. Vorzugsweise verschwenkt das Rückhalteelement beim Einnehmen dieses Zustands in die Ruheposition. Die Einstellvorrichtung ist so ausgebildet, dass dieser Zustand vorzugsweise mittels einer Eingabeeinrichtung, z.B. auf Knopfdruck, oder per Steuerung durch den Computer eingeleitet werden kann. Insofern bietet das erfindungsgemäße Frachtgatter sämtliche Funktionalitäten an, die auch durch die herkömmlichen deutlich schwereren Frachtgatter bereitgestellt wurden.

Das Rückhalteelement kann mindestens eine Aussparung zur Aufnahme von auf dem Frachtdeck angebrachten Funktionselementen in der Ruheposition umfassen. Da das flächig ausgestaltete Rückhalteelement in dessen Ruheposition einen wesentlichen Abschnitt des Frachtdecks abdeckt, kann es vorteilhaft sein, wenn Aussparungen vorgesehen werden, die entsprechende Funktionselemente aufnehmen und deren Verwendung nicht verhindern. Beispielsweise kann eine Antriebsrolle durch die Aussparung in der Ruheposition so in den Frachtraum hineinragen, dass die Frachtstücke mit geringer Reibung auf dem Frachtdeck transportiert werden können.

Die eingangs genannte Aufgabe wird des Weiteren durch ein Verfahren zum Um- oder Ausrüsten eines Frachtdecks zum Abwurf von Frachtstücken während des Fluges gelöst, wobei das Frachtdeck eine Vielzahl von, insbesondere am Randbereich des Frachtdecks, entlang einer X-Richtung angeordneten Riegeleinrichtungen zum Halten von Frachtstücken umfasst, wobei das Verfahren des Weiteren in dem Schritt des Befestigens einer Vielzahl von Frachtgattern, die jeweils ein Gelenk zum Verschwenken eines Rückhalteelements aus einer Rückhalteelementarbeitsposition in eine Ruheposition umfassen, derart am Frachtdeck, dass jeweils ein Anschlag jeweils eines Frachtgatters in Wirkverbindung mit jeweils einer verschwenkbaren Riegelnase jeweils einer Riegeleinrichtung bringbar ist, um das jeweilige Rückhalteelement in der Rückhalteelementarbeitsposition zu halten.

Weitere vorteilhafte Ausführungsformen ergeben sich anhand der Unteransprüche. Nachfolgend wird ein Ausführungsbeispiel der Erfindung anhand von Abbildungen näher erläutert. Hierbei zeigen:
- Fig. 1: einen Querschnitt durch einen Frachtraum eines Flugzeugs, der mit den erfindungsgemäßen Frachtgattern gesicherte Frachtstücke enthält;
- Fig. 2: einen Längsschnitt durch den Frachtraum aus Fig. 1;
- Fig. 3: eine Draufsicht auf den Frachtraum aus Fig. 1;
- Fig. 4: eine perspektivische Darstellung eines der Frachtgatter aus Fig. 1;
- Fig. 5: eine Seitenansicht des Frachtgatters aus Fig. 4;
- Fig. 6: eine Draufsicht auf das Frachtgatter aus Fig. 4;
- Fig. 7: eine weitere Seitenansicht des Frachtgatters aus Fig. 4;
- Fig. 8: eine perspektivische Darstellung eines Teilabschnitts eines Frachtdecks mit dem erfindungsgemäßen Frachtgatter;
- Fig. 9: eine Seitenansicht der Seitenführungen, die in dem Frachtdeck aus Fig. 8 verwendet werden.

In der nachfolgenden Beschreibung werden für gleiche und gleich wirkende Teile dieselben Bezugsziffern verwendet.

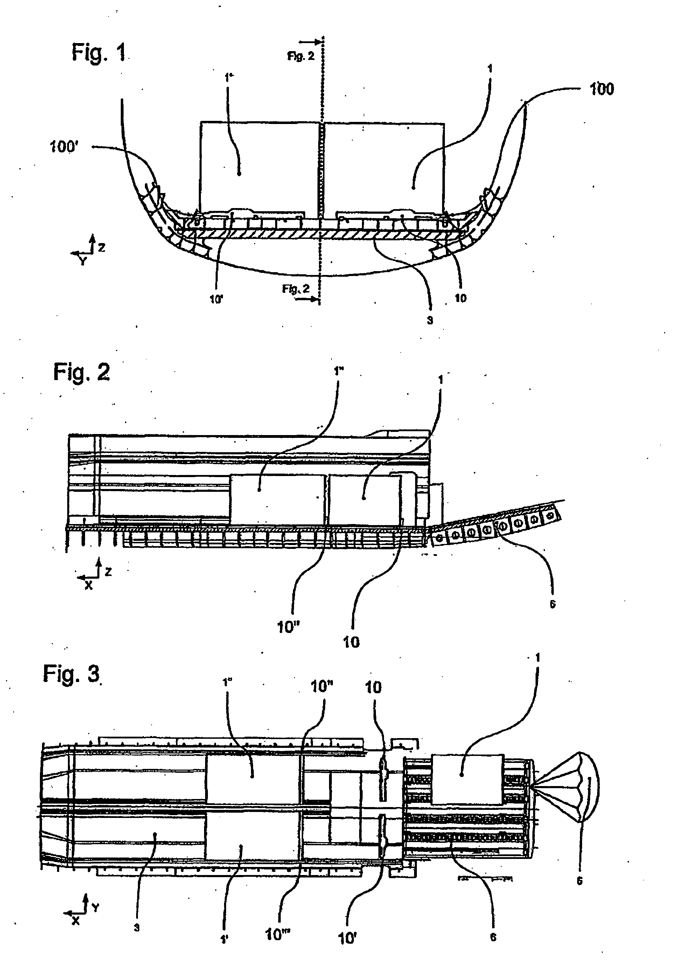

Fig. 1 zeigt einen Querschnitt durch den Bauch eines Flugzeugs entlang der Y-Z-Ebene. Innerhalb der X-Y-Ebene erstreckt sich dort ein Frachtraumboden 3, der verschiedene Funktionselemente zum Halten, Führen und Befördern von Frachtstücken 1, 1', 1" aufweist. Der Frachtraumboden 3 aus Fig. 1 weist zwei Ladebahnen auf, die jeweils durch eine Seitenführung 100, 100' begrenzt sind. Mittig zwischen den Ladebahnen ist eine Mittelführung (center guide) angeordnet, die sich der Fig. 1 nicht explizit entnehmen lässt. In der Fig. 1 ist auf der rechten Seite ein erstes Frachtstück 1 und auf der linken Seite ein zweites Frachtstück 1' zu sehen. Um diese Frachtstücke gegen eine Bewegung auf das Heck des Flugzeugs zu abzusichern, ist ein erfindungsgemäßes erstes Frachtgatter 10 und ein erfindungsgemäßes zweites Frachtgatter 10' vorgesehen, das in Wirkverbindung mit der jeweiligen Seitenführung 100, 100' steht.

Fig. 2 zeigt einen Längsschnitt durch den bereits in Fig. 1 dargestellten Frachtraum. In dem Längsschnitt sieht man lediglich die Frachtstücke 1, 1", die in der rechten Frachtladebahn verstaut sind. In dem Längsschnitt zeigt sich ein drittes erfindungsgemäßes Frachtgatter 10", das das dritte Frachtstück 1" gegen eine Bewegung auf das Heck, insbesondere die dort bereits teilweise geöffnete Heckklappe 6 zu verhindert. Das dritte Frachtgatter 10" verhindert ebenfalls eine Bewegung des ersten Frachtstücks 1 in Richtung auf den Bug des Flugzeuges zu.

Die Draufsicht aus Fig. 3 zeigt insgesamt vier Frachtgatter 10, 10', 10", 10"', wobei das erste Frachtgatter 10 und das zweite Frachtgatter 10' sich jeweils in einer Ruheposition befinden, in der diese durch Frachtstücke 1, 1', 1" überfahren werden können. Das dritte und vierte Frachtgatter 10", 10'" sind in einer Rückhalteelementarbeitsposition, so dass diese das zweite und dritte Frachtstück 1', 1" derart absichern, dass sich diese nicht auf das Heck zu bewegen können.

Die Fig. 3 verdeutlicht weiterhin den Abwurfvorgang von Frachtstücken 1, 1', 1" während des Fluges. So wird ein Antriebsfallschirm 5 ausgeworfen, der fest mit dem ersten Frachtstück 1 verbunden ist. Dieser Antriebsfallschirm zieht, wie in Fig. 3 dargestellt, das erste Frachtstück über das erste Frachtgatter 10 hinweg aus dem Frachtraum des Flugzeuges heraus. Um das erste Frachtstück 1 freizugeben, ist es notwendig, dass sich das erste Frachtgatter 10 in der Ruheposition befindet.

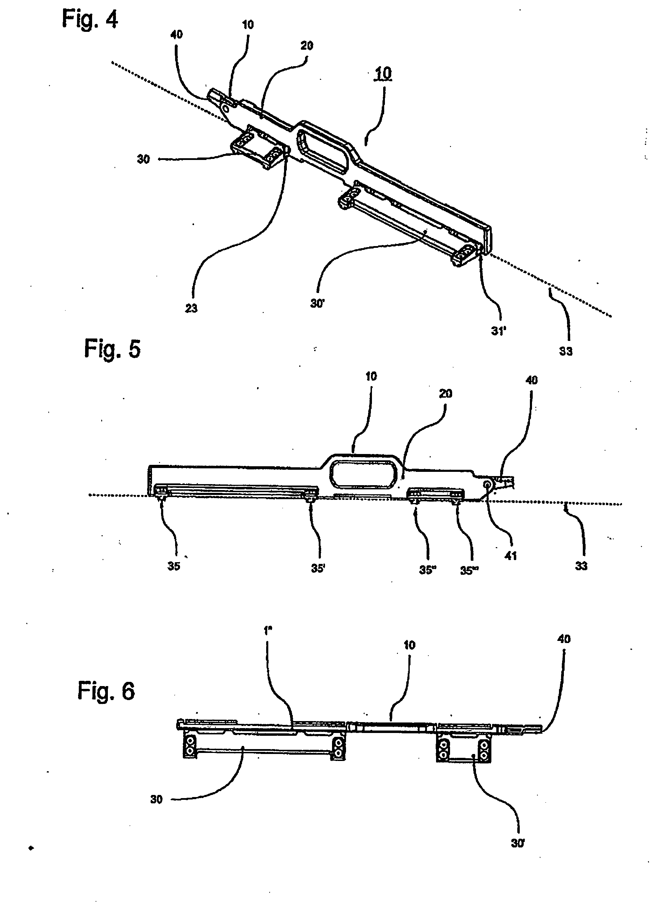

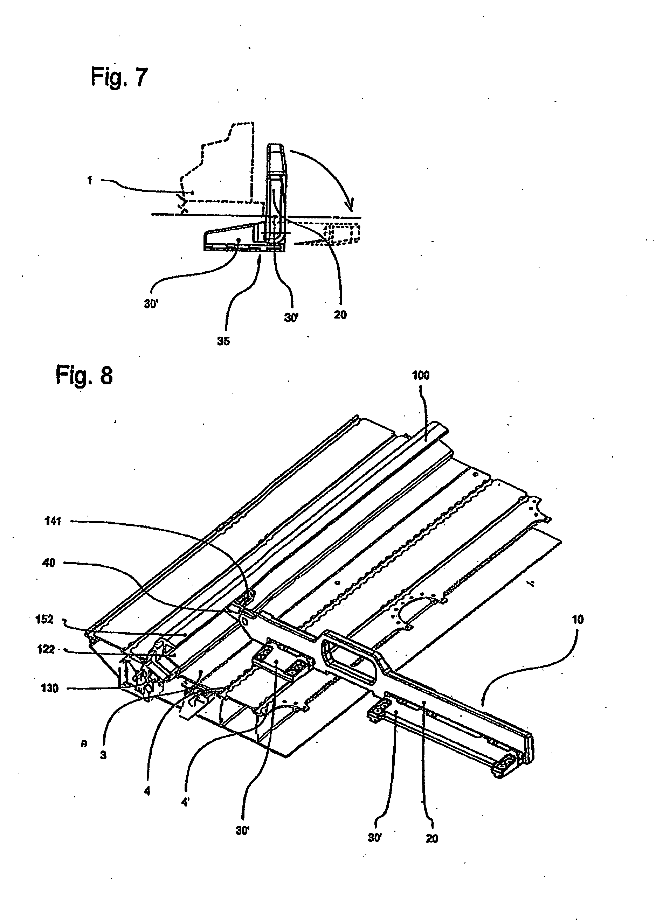

Die Fig. 4 bis 6 zeigen eine Detailansicht des erfindungsgemäßen Frachtgatters 10. Dieses umfasst ein flächig ausgebildetes Rückhalteelement 20, das drehbeweglich über ein erstes Befestigungsgelenk 31 (ein Scharniergelenk) und ein zweites Befestigungsgelenk 31' mit einer ersten Befestigungseinrichtung 30 bzw. einer zweiten Befestigungseinrichtung 30' verbunden ist. Das Rückhalteelement 20 lässt sich also um eine Rotationsachse 33 relativ zu den Befestigungseinrichtungen 30, 30' verschwenken. In einer Ruheposition befindet sich das Rückhalteelement 20 im Wesentlichen in derselben Ebene wie die flächigen Befestigungseinrichtungen 30, 30'. In der Rückhalteelementarbeitsposition (vgl. Fig. 7) bilden die Befestigungseinrichtungen 30, 30' und das Rückhalteelement 20 einen im Wesentlichen rechtwinkligen Winkel. Die erste Befestigungseinrichtung 30 weist zwei Halteschlitten 35, 35' und die zweite Befestigungseinrichtung 30' zwei Halteschlitten 35", 35'" auf, die sich im Wesentlichen an den Randbereichen der Befestigungseinrichtungen 30, 30' in Längsrichtung (X-Richtung) des Flugzeugs erstrecken.

Des Weiteren ist eine ovale Aussparung in dem Rückhalteelement 20 vorgesehen, die in dessen Ruheposition eine Frachtladerolle aufnimmt, die den Transport der Frachtstücke 1, 1', 1" erleichtert.

Die Fig. 7 verdeutlicht den Abklappvorgang des Rückhalteelements 20 aus der Rückhalteelementarbeitsposition in die Ruheposition. So kann bei einem Abwurf das Frachtstück 1 derart mittels eines Antriebsfallschirms 5 beschleunigt werden, dass dieses mit erheblicher Kraft gegen das Rückhalteelement 20 in der Rückhalteelementarbeitsposition drückt. Diese Kraft reicht aus, um das Rückhalteelement 20 in die gestrichelt angedeutete Ruhestellung zu verschwenken. Vorzugsweise weist das Frachtgatter 10 des Weiteren ein Federelement auf, das das Rückhalteelement 20 in die Ruheposition vorspannt.

Erfindungsgemäß hat das Rückhalteelement 20 einen gelenkig an der Seite des Rückhalteelements 20 angeordneten Anschlag 40. Dieser Anschlag 40 lässt sich mittels eines Anschlaggelenks 41 aus einer Anschlagposition (vgl. Fig. 4 bis 6) in eine Absenkposition verschwenken. Die Verschwenkung findet im Wesentlichen in der Ebene statt, die durch das flächige Rückhalteelement 20 definiert wird. Im angeordneten Zustand des Frachtgatters 10 entspricht diese Ebene bei einer Einnahme der Rückhalteelementarbeitsposition der Y-Z-Ebene des Flugzeugs. In der Anschlagposition erstreckt sich der längliche Anschlag 40 im Wesentlichen als Fortsetzung des länglichen Rückhalteelements 20. In der Absenkposition steht die Längsachse des Anschlags 40 senkrecht auf der Längsachse des Rückhalteelements 20 (vgl. Rotationsachse 33).

Fig. 8 zeigt das Frachtgatter 10 im angeordneten Zustand auf dem Frachtraumboden. Der Frachtraumboden weist zur Befestigung des Frachtgatters 10 zwei in X-Richtung verlaufende Lochschienen 4, 4' auf, in die die Halteschlitten 35, 35' so eingreifen, dass die erste Befestigungseinrichtung 30 lösbar am Frachtraumboden 3 befestigt ist. Weitere Lochschienen 4, 4' für die Halteschlitten 35", 35"' der zweiten Befestigungseinrichtung 30' sind in der Fig. 8 nicht gezeigt.

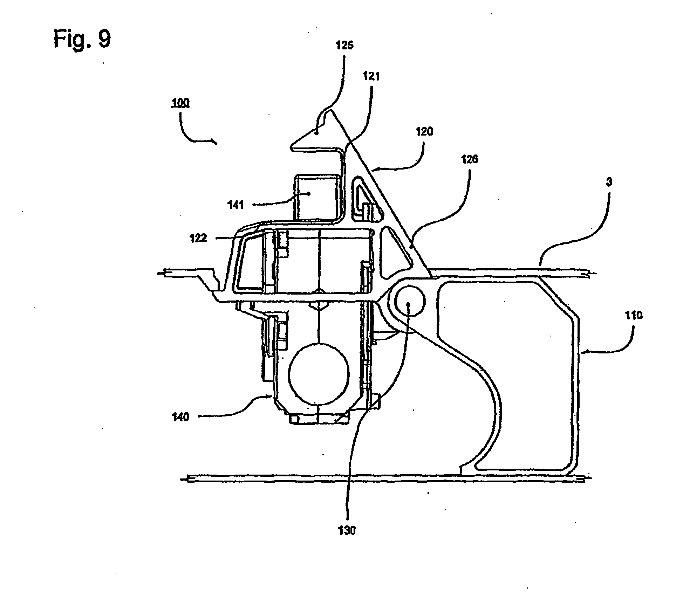

Das Rückhalteelement 20 befindet sich in Fig. 8 in der Rückhalteelementarbeitsposition, wobei der Anschlag 40 in der Anschlagposition ist und in einen Führungsbereich der Seitenschiene 100 eingreift. Dieser Führungsbereich wird durch einen Führungsvorsprung 125, eine Horizontalführungsfläche 122 und eine Vertikalführungsfläche 121 begrenzt. In diesen Führungsbereich ragt eine Riegelnase 141, eine Riegeleinrichtung 140 (vgl. Fig. 9) hinein. Der Anschlag 40 und die Riegelnase 141 stehen derart in Wirkverbindung, dass in Längsrichtung, insbesondere auf das Heck zu, wirkende Kräfte von dem Rückhalteelement 20 über die Riegelnase 141 in die Seitenführung 100 eingeleitet werden. Konkret liegt der Anschlag 20 so an der Riegelnase 141 an, dass das Rückhalteelement 20 nicht in dessen Ruheposition verschwenkt werden kann.

Vorzugsweise werden Kräfte entlang der Längsrichtung auf den Bug zu anhand eines in das Frachtgitter integrierten Anschlags abgefangen.

Die Riegelnase 141 aus der Seitenführung 100 lässt sich mechanisch aus der gezeigten Riegelnasenarbeitsposition in eine Ladeposition verschwenken. In dieser Ladeposition ragt die Riegelnase 141 nicht mehr oder nur geringfügig in den Führungsbereich der Seitenführung 100. Sobald die Riegelnase 141 abgesenkt ist (Ladeposition), wird das Rückhalteelement 20 nicht mehr von dieser gehalten. Das Rückhalteelement 20 kann in die Ruheposition verschwenkt werden, wobei der Anschlag 40 während des Abklappvorgangs nach oben schwenkt, bis dieser die Absenkposition eingenommen hat. Wenn sich der Anschlag 40 in der Absenkposition und das Rückhalteelement 20 in der Ruheposition befinden, erstreckt sich eine Längsachse des Anschlags 40 im Wesentlichen parallel zur Seitenführung 100.

Die Fig. 9 zeigt die Seitenführung 100 mit der Riegeleinrichtung 140 im Detail. Wie bereits erläutert, begrenzen die Horizontalführungsfläche 122, die Vertikalführungsfläche 121 und der Führungsvorsprung einen Führungsbereich und bilden im Wesentlichen ein U-Profil aus, in das Randabschnitte von Frachtstücken zu deren Halterung eingeführt werden können. Wie bereits eingangs erläutert, weisen besonders genormte Frachtstücke Aussparungen auf, die korrespondierend zu der Riegelnase 141 ausgebildet sind und innerhalb der Seitenführung 100 fixiert werden können. Andere Frachtstücke 1, 1', 1" haben keine entsprechenden Aussparungen, können aber auf einfache Art und Weise durch das erfindungsgemäße Frachtgatter 10 gesichert werden.

Die Riegeleinrichtung 140 ist fest mit der Seitenführung 100 verbunden und ragt nach unten weg. Die Horizontalführungsfläche 122 hat eine Öffnung, durch die die Riegelnase 141 in den Führungsbereich eingreift. Die zur Betätigung der Riegelnase 141 notwendige Mechanik befindet sich innerhalb der Riegeleinrichtung 140. Insbesondere kann hier ein elektrischer Antrieb vorgesehen werden, der die Einnahme mehrerer Zustände erlaubt. Hierunter kann ein Ladezustand fallen, in dem sich die Riegelnase in der Ladeposition befindet. Des Weiteren kann ein Haltezustand implementiert werden, in dem sich die Riegelnase 141 in der Arbeitsposition befindet und festgestellt ist. Das heißt, unabhängig von der auf die Riegelnase 141 wirkende Kraft bleibt die Riegelnase 141 in dieser Position. Vorzugsweise gibt es auch einen Auslösezustand der Riegeleinrichtung 140, in dem sich die Riegelnase 141 in der Riegelnasenarbeitsposition befindet, jedoch dann aus der Riegelnasenarbeitsposition in die Ladeposition verschwenkbar ist, wenn eine auf die Riegelnase 141, vorzugsweise in X-Richtung wirkende Kraft einen vorbestimmten Betrag übersteigt. In dem Auslösezustand reicht die Haltekraft der Riegelnase 141 noch aus, um das Rückhalteelement 20 in der Rückhalteelementarbeitsposition zu halten. Das Rückhalteelement 20 kann auch noch gewisse Kräfte aufnehmen, die durch die Frachtstücke 1, 1', 1" aufgebracht werden. Übersteigen diese Kräfte jedoch einen vorgegebenen Betrag (z.B. der Antriebsfallschirm 5 wurde ausgeworfen), so verschwenkt die wirkende Kraft die Riegelnase 141 in die Ladeposition. Entsprechende mechanische Bauteile werden in der Fig. 9 nicht gezeigt. Für den hier tätigen Fachmann sollte es jedoch offensichtlich sein, wie eine entsprechende Riegeleinrichtung 140 auszugestalten ist. Vorzugsweise wird also die Riegelnase 141 beim Abwurf von Fracht während des Fluges nicht in die Ladeposition, sondern in den Auslösezustand gebracht, so dass die Riegelnase 141 erst dann abgesenkt wird, wenn der Antriebsfallschirm 5 ausgeworfen wurde.

Die in Fig. 9 gezeigte Seitenführung 100 ist gelenkig mit einem Fußelement 110 verbunden, so dass auch die Seitenführung 100 zur Bildung eines planen Abschnitts abgesenkt werden kann. Hierfür ist ein Seitenführungsdrehgelenk 130 vorgesehen.

In dem vorab beschriebenen Ausführungsbeispiel weist das erfindungsgemäße Rückhalteelement 20 lediglich einen Anschlag 40 auf, der mit der Riegelnase 141 in Wirkverbindung steht. In einem weiteren Ausführungsbeispiel könnten wechselseitig an dem Rückhalteelement 20 jeweils ein Anschlag 40 vorgesehen werden, so dass größere Kräfte in entsprechend angeordnete Riegelnasen 141 eingeleitet werden können.

In dem in Fig. 8 gezeigten Abschnitt der Seitenführung 100 ist lediglich eine Riegeleinrichtung 140 in diese integriert. Erfindungsgemäß können in eine Seitenführung 100 zahlreiche Riegeleinrichtungen integriert sein.

In dem beschriebenen Ausführungsbeispiel ist das erfindungsgemäße Frachtgatter 10 in einer Position auf dem Frachtraumboden 3 angeordnet, in der der Anschlag 40 mit der Riegelnase 141 kooperiert. Es sollte für den hier tätigen Fachmann offensichtlich sein, dass das erfindungsgemäße Frachtgatter 10 weitere Positionen auf dem Frachtraumboden 3 einnehmen kann, in denen der Anschlag 40 - und somit das Rückhalteelement 20 - von anderen Riegeln 141, die anderen Riegeleinrichtungen 140 zugeordnet sind, gehalten wird.

In dem beschriebenen Ausführungsbeispiel klappt der Anschlag 40 nach oben in eine Absenkposition weg. Es sind zahlreiche andere Mechanismen denkbar, um den Anschlag 40 in geeigneter Weise aus dem Führungsbereich der Seitenführung 100 zu entfernen. Beispielsweise kann der Anschlag 40 nach unten oder in das Innere des Rückhalteelements 20 verschwenkt werden.

Die beschriebene Riegeleinrichtung 140 hat eine Riegelnase 141, die von unten in die Seitenführung 100 hineinragt. Genauso gut kann die Riegelnase seitlich in die Seitenführung hineinragen oder aus jeder anderen Richtung.

In dem vorab beschriebenen Abwurfvorgang wird die Riegeleinrichtung 140 in den Auslösezustand gebracht während sich das Rückhalteelement 20 in der Rückhalteelementarbeitsposition befindet, der Antriebsfallschirm 5 wird ausgeworfen und das Rückhalteelement 20 durch das beschleunigte Frachtstück 1 überfahren, wobei sich dieses in die Ruheposition absenkt. Das erfindungsgemäße Rückhalteelement 20 lässt sich jedoch auch ohne das Aufbringen zusätzlicher Kräfte selbstständig in die Ruheposition verschwenken. Beispielsweise ist es denkbar, dass ein Computer oder eine Steuereinrichtung den Antriebsfallschirm 5 auswirft und gleichzeitig das Rückhalteelement 20 in die Ruheposition bringt. Hierfür wird die Riegelnase 141 abgesenkt, so dass das Rückhalteelement 20 nicht mehr in der Rückhalteelementarbeitsposition gehalten wird. Vorzugsweise bewirken vorgesehene Federelemente ein Umklappen des Rückhalteelements 20 in die Ruheposition.

Des Weiteren ist es möglich, einen Abwurfvorgang ohne Antriebsfallschirme 5 vorzunehmen. So können die Rückhalteelemente 20 automatisch oder manuell in die Ruheposition gebracht und der Anstellwinkel des Flugzeugs so erhöht werden, dass die Frachtstücke 1, 1', 1" oder eines dieser aus dem Frachtraum herausrollen. Theoretisch wäre es auch denkbar, die Riegeleinrichtung 140 derart zu konfigurieren, dass im Auslösezustand der Riegelnase 141 die durch das Erhöhen des Anstellwinkels auf das Rückhalteelement 20 wirkende Kraft ausreicht, um ein automatisches Verschwenken des Rückhalteelements 20 in die Ruheposition zu bewerkstelligen.

### Bezugszeichen

- 1, 1', 1": Frachtstück
- 3: Frachtraumboden
- 4, 4': Lochschiene
- 5: Antriebsfallschirm
- 6: Heckklappe
- 10, 10', 10'', 10''': Frachtgatter
- 20: Rückhalteelement
- 30, 30': Befestigungseinrichtung
- 31, 31': Befestigungsgelenk
- 33: Rotationsachse
- 35, 35', 35'', 35''': Halteschlitten
- 40: Anschlag
- 41: Anschlaggelenk
- 100, 100': Seitenführung
- 110: Fußelement
- 120: Führungselement
- 121: Vertikalführungsfläche
- 122: Horizontalführungsfläche
- 125: Führungsvorsprung
- 126: Deckelfläche
- 130: Seitenführungsdrehgelenk
- 140: Riegeleinrichtung
- 141: Riegelnase

## Patentansprüche

1. Frachtdeck eines Flugzeugs, das sich entlang einer X-Richtung und einer Y-Richtung erstreckt und
mindestens eine Riegeleinrichtung (140) mit einer Riegelnase (141) umfasst, die aus einer Riegelnasenarbeitsposition in eine Ladeposition verschwenkbar ist, und
mindestens ein Frachtgatter (10, 10', 10", 10"') zum Halten mindestens eines Frachtstücks (1, 1', 1") auf einer vorgegebenen Position innerhalb eines Frachtraums des Flugzeugs, wobei das Frachtgatter (10, 10', 10", 10"') umfasst:
- mindestens ein Rückhalteelement (20);
- mindestens eine Befestigungseinrichtung (30, 30') mit mindestens einem Gelenk zur gelenkigen Befestigung des Rückhalteelements (20) an einem Frachtraumboden (3), so dass das Rückhalteelement (20) aus einer Rückhalteelementarbeitsposition zum Halten des mindestens einen Frachtstücks (1, 1', 1") in eine Ruheposition verschwenkbar ist, wobei das Rückhalteelement (20) in der Ruheposition durch das mindestens eine Frachtstück (1, 1', 1") überfahrbar ist, und **dadurch gekennzeichnet, dass** das Frachtgatter weiter umfasst:
- einen Anschlag (40) am Rückhalteelement (20), der mit der verschwenkbaren Riegelnase (141) der Riegeleinrichtung (140) in Wirkverbindung bringbar ist, um das Rückhalteelement (20) in der Rückhalteelementarbeitsposition zu halten.

2. Frachtdeck gemäß Anspruch 1,
**dadurch gekennzeichnet, dass**
der Anschlag (40) mittels eines Anschlaggelenks (41) aus einer Anschlagsposition in eine Absenkposition verschwenkbar ist.

3. Frachtdeck gemäß Anspruch 2,
**gekennzeichnet durch**
mindestens ein Federelement, das den Anschlag (40) in die Absenkposition vorspannt.

4. Frachtdeck gemäß einem der vorhergehenden Ansprüche,
**dadurch gekennzeichnet, dass**
das Gelenk zum Verschwenken des Rückhalteelements (20) aus der Rückhalteelementarbeitsposition in die Ruheposition ein Drehgelenk umfasst, das eine Rotationsachse (33) definiert.

5. Frachtdeck gemäß Anspruch 4,
**dadurch gekennzeichnet, dass**
der Anschlag (40) das Rückhalteelement (20) in der Anschlagposition in eine Richtung parallel zur Rotationsachse (33) überragt.

6. Frachtdeck gemäß einem der vorhergehenden Ansprüche,
**dadurch gekennzeichnet, dass**
die Befestigungseinrichtung (30, 30') eine Halteeinrichtung, nämlich einen Halteschlitten (35, 35', 35", 35"'), zur Befestigung in einer Lochschiene (4, 4') und/oder Sitzschiene des Frachtraums umfasst.

7. Frachtdeck gemäß einem der vorhergehenden Ansprüche,
**gekennzeichnet durch**
mindestens eine entlang der X-Richtung verlaufende Seitenführung (100, 100') zum Halten und Führen der Frachtstücke (1, 1', 1"), wobei die mindestens eine Riegeleinrichtung (140) derart angeordnet ist, dass deren Riegelnase (141) in einen Führungsbereich der Seitenführung (100, 100') hineinragt.

8. Frachtdeck nach Anspruch 7,
**gekennzeichnet durch**
eine Vielzahl von Riegeleinrichtungen (140), die zum Halten von Frachtstücken (1, 1', 1") in den Führungsbereich der Seitenführung (100, 100') hineinragen, wobei Fixierpunkte am Frachtdeck vorgesehen sind, um das mindestens eine Frachtgatter (10, 10', 10", 10"') an Positionen festzusetzen, in denen jeweils mindestens eine Riegelnase (141) der Vielzahl von Riegeleinrichtungen (140) mit dem Anschlag (40) des mindestens einen Frachtgatters (10, 10', 10", 10"') in Wirkverbindung bringbar ist.

9. Frachtdeck gemäß einem der vorhergehenden Ansprüche,
**dadurch gekennzeichnet, dass**
die Riegeleinrichtung (140) eine Einstellvorrichtung zur ferngesteuerten, elektrischen und/oder pneumatischen Betätigung umfassen.

10. Frachtdeck gemäß Anspruch 9,
**dadurch gekennzeichnet, dass**
die Einstellvorrichtung derart ausgebildet ist, dass die Riegeleinrichtung (140) in mindestens drei Zustände bringbar ist, nämlich:
- einem Ladezustand, in dem sich die Riegelnase (141) in der Ladeposition befindet,
- einem Haltezustand, in dem sich die Riegelnase (141) in der Riegelnasenarbeitsposition befindet und festgestellt ist, und
- einem Auslösezustand, in dem sich die Riegelnase (141) in der Riegelnasenarbeitsposition befindet, jedoch dann aus der Riegelnasenarbeitsposition in die Ladeposition verschwenkbar ist, wenn eine auf die Riegelnase (141) in X-Richtung wirkende Kraft, die durch das Frachtgatter (10, 10', 10", 10"') ausgeübt wird, einen vorbestimmten Betrag übersteigt.

11. Frachtdeck gemäß Anspruch 9 oder 10,
**dadurch gekennzeichnet, dass**
die Einstellvorrichtung eine Federeinrichtung umfasst, welche den vorbestimmten Betrag der in X-Richtung wirkenden Kraft (F) definiert.

12. Frachtdeck gemäß Anspruch 11,
**dadurch gekennzeichnet, dass**
die Federeinrichtung eine elektromotorisch verstellbare Spanneinrichtung umfasst zum Einstellen einer Vorspannung einer Haltefeder.

13. Frachtdeck gemäß einem der vorhergehenden Ansprüche,
**dadurch gekennzeichnet, dass**
das Rückhalteelement (20) Aussparungen zur Aufnahme von auf dem Frachtdeck angebrachten Funktionselementen in der Ruheposition umfasst.

14. Verfahren zum Um- oder Ausrüsten eines Frachtdecks zum Abwurf von Frachtstücken (1, 1', 1") während des Fluges, wobei das Frachtdeck eine Vielzahl von, am Randbereich des Frachtdecks entlang einer X-Richtung angeordnete Riegeleinrichtungen (140) zum Halten von Frachtstücken (1, 1', 1") umfasst,
**gekennzeichnet durch**
ein Befestigen einer Vielzahl von Frachtgattern (10, 10', 10", 10"'),
wobei das Frachtgatter (10, 10', 10", 10"') umfasst:
- mindestens ein Rückhalteelement (20);
- mindestens eine Befestigungseinrichtung (30, 30') mit mindestens einem Gelenk zur gelenkigen Befestigung des Rückhalteelements (20) an einem Frachtraumboden (3), so dass das Rückhalteelement (20) aus einer Rückhalteelementarbeitsposition zum Halten des mindestens einen Frachtstücks (1, 1', 1") in eine Ruheposition verschwenkbar ist, wobei das Rückhalteelement (20) in der Ruheposition **durch** das mindestens eine Frachtstück (1, 1', 1") überfahrbar ist,
- einen Anschlag (40) am Rückhalteelement (20), der mit der verschwenkbaren Riegelnase (141) der Riegeleinrichtung (140) in Wirkverbindung bringbar ist, um das Rückhalteelement (20) in der Rückhalteelementarbeitsposition zu halten.

## Claims

1. Cargo deck of an aircraft, which extends along an X-direction and a Y direction
and
comprises at least one locking device (140) having a locking lug (141) which is pivotable out of a locking lug working position into a loading position, and at least one cargo gate (10, 10', 10", 10"') for holding at least one item of cargo (1, 1', 1") at a predetermined position inside a cargo hold of the aircraft, the cargo gate (10, 10', 10", 10"') comprising:
- at least one retaining element (20);
- at least one mounting device (30, 30') having at least one joint for articulated mounting of the retaining element (20) on a cargo hold floor (3) so that the retaining element (20) is pivotable out of a retaining element working position for holding the at least one item of cargo (1, 1', 1") into a rest position, it being possible for the at least one item of cargo (1, 1', 1") to pass over the retaining element (20) in the rest position, and **characterised in that** the cargo gate further comprises:
- a stop (40) on the retaining element (20), which stop can be brought into operative connection with the pivotable locking lug (141) of the locking device (140) in order to hold the retaining element (20) in the retaining element working position.

2. Cargo deck according to claim 1,
**characterised in that**
the stop (40) is pivotable by means of a stop joint (41) out of a stop position into a lowering position.

3. Cargo deck according to claim 2,
**characterised by** at least one spring element which biases the stop (40) into the lowering position.

4. Cargo deck according to any one of the preceding claims,
**characterised in that**
the joint for pivoting the retaining element (20) out of the retaining element working position into the rest position comprises a pivot joint which defines a rotational axis (33).

5. Cargo deck according to claim 4,
**characterised in that**
in the stop position the stop (40) projects beyond the retaining element (20) in a direction parallel to the rotational axis (33).

6. Cargo deck according to any one of the preceding claims,
**characterised in that**
the mounting device (30, 30') comprises a holding device, namely a holding carriage (35, 35', 35", 35"'), for mounting in a perforated rail (4, 4') and/or seat rail of the cargo hold.

7. Cargo deck according to any one of the preceding claims,
**characterised by**
at least one lateral guide means (100, 100') running along the X-direction for holding and guiding the items of cargo (1, 1', 1"), the at least one locking device (140) being arranged in such a way that its locking lug (141) projects into a guide region of the lateral guide means (100, 100').

8. Cargo deck according to claim 7,
**characterised by**
a multiplicity of locking devices (140) which, for holding items of cargo (1, 1', 1 "), project into the guide region of the lateral guide means (100, 100'), there being provided on the cargo deck fixing points for fixing the at least one cargo gate (10, 10', 10", 10"') in positions in each of which at least one locking lug (141) of the multiplicity of locking devices (140) can be brought into operative connection with the stop (40) of the at least one cargo gate (10, 10', 10", 10"').

9. Cargo deck according to any one of the preceding claims,
**characterised in that**
the locking device (140) comprises an adjusting means for remote-controlled, electrical and/or pneumatic actuation.

10. Cargo deck according to claim 9,
**characterised in that**
the adjusting means is constructed in such a way that the locking device (140) can be brought into at least three states, namely:
- a loading state, in which the locking lug (141) is located in the loading position,
- a holding state, in which the locking lug (141) is located and fixed in the locking lug working position, and
- an armed state, in which the locking lug (141) is located in the locking lug working position but is pivotable out of the locking lug working position into the loading position when a force exerted by the cargo gate (10, 10', 10", 10"') acting on the locking lug (141) in the X-direction exceeds a predetermined amount.

11. Cargo deck according to claim 9 or 10,
**characterised in that**
the adjusting means comprises a spring device which defines the predetermined amount of the force (F) acting in the X-direction.

12. Cargo deck according to claim 11,
**characterised in that**
the spring device comprises a tensioning device which is adjustable by means of an electric motor to adjust the bias of a holding spring.

13. Cargo deck according to any one of the preceding claims, **characterised in that**
the retaining element (20) has openings for receiving, in the rest position, functional elements mounted on the cargo deck.

14. Method of refitting or fitting out a cargo deck for dropping items of cargo (1, 1', 1") during flight, the cargo deck comprising a multiplicity of locking devices (140) arranged along an X-direction in the edge region of the cargo deck for holding items of cargo (1, 1', 1"),
**characterised by**
the mounting of a multiplicity of cargo gates (10, 10', 10", 10"'), the cargo gate (10, 10', 10", 10"') comprising:
- at least one retaining element (20);
- at least one mounting device (30, 30') having at least one joint for articulated mounting of the retaining element (20) on a cargo hold floor (3) so that the retaining element (20) is pivotable out of a retaining element working position for holding the at least one item of cargo (1, 1', 1") into a rest position, it being possible for the at least one item of cargo (1, 1', 1") to pass over the retaining element (20) in the rest position,
- a stop (40) on the retaining element (20), which stop can be brought into operative connection with the pivotable locking lug (141) of the locking device (140) in order to hold the retaining element (20) in the retaining element working position.

## Revendications

1. Plancher de soute d'un aéronef, qui s'étend le long d'une direction X et d'une direction Y, et qui comprend au moins un dispositif de verrouillage (140) avec un ergot de verrouillage (141), qui peut pivoter d'une position de travail de l'ergot de verrouillage à une position de chargement et qui comprend au moins un dispositif de retenue (10, 10', 10", 10"') pour retenir au moins une pièce de fret (1, 1', 1") sur une position prédéterminée à l'intérieur d'une soute de chargement de l'aéronef, dans lequel le dispositif de retenue (10, 10', 10", 10'") comprend :
- au moins un élément de retenue (20) ;
- au moins un dispositif de fixation (30, 30') muni d'au moins une articulation pour la fixation articulée de l'élément de retenue (20) à un sol de soute de chargement (3), de telle manière que l'élément de retenue (20) puisse pivoter d'une position de travail de l'élément de retenue pour la retenue de ladite au moins une pièce de fret (1, 1', 1 ") à une position de repos, dans lequel l'élément de retenue (20) peut être amené dans la position de repos par ladite au moins une pièce de fret (1, 1', 1"),
et **caractérisé en ce que** le dispositif de retenue comprend en outre
- une butée (40) sur l'élément de retenue (20), qui peut être amenée en liaison active avec l'ergot de verrouillage pivotant (141) du dispositif de verrouillage (140), afin de maintenir l'élément de retenue (20) dans la position de travail de l'élément de retenue.

2. Plancher de soute selon la revendication 1, **caractérisé en ce que** la butée (40) peut pivoter au moyen d'une articulation de butée (41) d'une position de butée à une position d'effacement.

3. Plancher de soute selon la revendication 2, **caractérisé par** au moins un élément de ressort, qui précontraint la butée (40) dans la position d'effacement.

4. Plancher de soute selon l'une quelconque des revendications précédentes, **caractérisé en ce que** l'articulation destinée au pivotement de l'élément de retenue (20) de la position de travail de l'élément de retenue à la position de repos comprend une articulation rotative, qui définit un axe de rotation (33).

5. Plancher de soute selon la revendication 4, **caractérisé en ce que** la butée (40) dépasse l'élément de retenue (20) dans la position de butée dans une direction parallèle à l'axe de rotation (33).

6. Plancher de soute selon l'une quelconque des revendications précédentes, **caractérisé en ce que** le dispositif de fixation (30, 30') comprend un dispositif de maintien, à savoir un traîneau de maintien (35, 35', 35", 35"') destiné à être fixé dans un rail perforé (4, 4') et/ou un rail de siège de la soute de chargement.

7. Plancher de soute selon l'une quelconque des revendications précédentes, **caractérisé par** au moins un guidage latéral (100, 100') s'étendant le long de la direction X pour maintenir et guider les pièces de fret (1, 1', 1 "), dans lequel ledit au moins un dispositif de verrouillage (140) est disposé d'une manière telle que son ergot de verrouillage (141) s'engage dans une région de guidage du guidage latéral (100, 100').

8. Plancher de soute selon la revendication 7, **caractérisé par** une multiplicité de dispositifs de verrouillage (140), qui s'engagent dans la région de guidage du guidage latéral (100, 100') pour maintenir des pièces de fret (1, 1', 1 "), dans lequel il est prévu des points de fixation sur le plancher de fret, pour caler ledit au moins un dispositif de retenue (10, 10', 10", 10"') dans des positions dans lesquelles au moins un ergot de verrouillage (141) de la multiplicité de dispositifs de verrouillage (140) peut être amené respectivement en liaison active avec la butée (40) dudit au moins un dispositif de retenue (10, 10', 10", 10"').

9. Plancher de soute selon l'une quelconque des revendications précédentes, **caractérisé en ce que** le dispositif de verrouillage (140) comprend un dispositif de réglage pour factionnement télécommandé, électrique et/ou pneumatique.

10. Plancher de soute selon la revendication 9, **caractérisé en ce que** le dispositif de réglage est configuré de telle manière que le dispositif de verrouillage (140) puisse être amené dans au moins trois états, à savoir :
- un état de chargement, dans lequel l'ergot de verrouillage (141) se trouve dans la position de chargement,
- un état de maintien, dans lequel l'ergot de verrouillage (141) se trouve et est calé dans la position de travail de l'ergot de verrouillage, et
- un état de libération, dans lequel l'ergot de verrouillage (141) se trouve dans la position de travail de l'ergot de verrouillage, mais peut cependant pivoter de la position de travail de l'ergot de verrouillage à la position de chargement, lorsqu'une force agissant dans la direction X sur l'ergot de verrouillage (141), qui est exercée par le dispositif de retenue (10, 10', 10", 10"'), dépasse une valeur prédéterminée.

11. Plancher de soute selon la revendication 9 ou 10, **caractérisé en ce que** le dispositif de réglage comprend un dispositif à ressort, qui définit la valeur prédéterminée de la force (F) agissant dans la direction X.

12. Plancher de soute selon la revendication 11, **caractérisé en ce que** le dispositif à ressort comprend un dispositif tendeur réglable par un moteur électrique pour régler une précontrainte d'un ressort de maintien.

13. Plancher de soute selon l'une quelconque des revendications précédentes, **caractérisé en ce que** l'élément de retenue (20) comprend des découpes destinées à recevoir des éléments fonctionnels placés sur le plancher de soute dans la position de repos.

14. Procédé pour convertir ou équiper un plancher de soute pour le lancement de pièces de fret (1, 1', 1 ") pendant un vol, dans lequel le plancher de soute comprend une multiplicité de dispositifs de verrouillage (140) disposés le long d'une direction X dans la région de bord du plancher de soute, afin de retenir des pièces de fret (1, 1', 1"), **caractérisé par** une fixation d'une multiplicité de dispositifs de retenue (10, 10', 10", 10"'), dans lequel le dispositif de retenue (10, 10', 10", 10"') comprend :
- au moins un élément de retenue (20) ;
- au moins un dispositif de fixation (30, 30') muni d'au moins une articulation pour la fixation articulée de l'élément de retenue (20) à un sol de soute de chargement (3), de telle manière que l'élément de retenue (20) puisse pivoter d'une position de travail de l'élément de retenue pour la retenue de ladite au moins une pièce de fret (1, 1', 1") à une position de repos, dans lequel l'élément de retenue (20) peut être amené dans la position de repos par ladite au moins une pièce de fret (1, 1', 1 "),
- une butée (40) sur l'élément de retenue (20), qui peut être amenée en liaison active avec l'ergot de verrouillage pivotant (141) du dispositif de verrouillage (140) afin de maintenir l'élément de retenue (20) dans la position de travail de l'élément de retenue.
